# EUROPEAN PATENT SPECIFICATION

(11) **EP 3 751 923 B1**
(45) Date of publication and mention of the grant of the patent: **07.12.2022**
(21) Application number: 19751272.6
(22) Date of filing: 02.02.2019
(51) Int. Cl.: H04W 72/02, H04L 5/00, H04L 27/26, H04W 72/12

(54) **METHOD FOR TRANSMITTING UCI, AND USER TERMINAL**
VERFAHREN ZUR ÜBERTRAGUNG VON UCI UND BENUTZERENDGERÄT
PROCÉDÉ DE TRANSMISSION D'UCI, ET TERMINAL UTILISATEUR

(30) Priority: 09.02.2018 CN 201810136167
(43) Date of publication of application: 16.12.2020
(60) Divisional application: 22203088.4
(73) Proprietor: Vivo Mobile Communication Co., Ltd., Dongguan, Guangdong 523860 (CN)
(72) Inventor: JI, Zichao, Dongguan, Guangdong 523860 (CN); PAN, Xueming, Dongguan, Guangdong 523860 (CN)
(74) Representative: Conti, Marco
(86) International application number: PCT/CN2019/074562
(87) International publication number: WO 2019/154356

(56) References cited:
- WO-A1-2017/034340
- WO-A1-2017/083651
- CATR: "UE procedure for reporting control information", 3GPP DRAFT; R1-1800762, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Vancouver, Canada; 20180122 - 20180126 12 January 2018 (2018-01-12), XP051384418, Retrieved from the Internet: URL:http://www.3gpp.org/ftp/tsg%5Fran/WG1% 5FRL1/TSGR1%5FAH/NR%5FAH%5F1801/Docs/ [retrieved on 2018-01-12]
- SHARP: "Simultaneous PUCCH and PUSCH transmission and collision handling", 3GPP DRAFT; R1-1718418, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Prague, Czech Republic; 20171009 - 20171013 8 October 2017 (2017-10-08), XP051341600, Retrieved from the Internet: URL:http://www.3gpp.org/ftp/Meetings_3GPP_ SYNC/RAN1/Docs/ [retrieved on 2017-10-08]
- LG ELECTRONICS: "Remaining issues on UL data transmission procedure", 3GPP DRAFT; R1-1800382 REMAINING ISSUES ON UL DATA TRANSMISSION PROCEDURE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDE , vol. RAN WG1, no. Vancouver, Canada; 20180122 - 20180126 13 January 2018 (2018-01-13), XP051384837, Retrieved from the Internet: URL:http://www.3gpp.org/ftp/tsg%5Fran/WG1% 5FRL1/TSGR1%5FAH/NR%5FAH%5F1801/Docs/ [retrieved on 2018-01-13]
- 3gpp: "3rd Generation Partnership Project; Technical Specification Group Radio Access Network; NR; Physical layer procedures for control (Release 15)", 3GPP TS 38.213 V15.0.0 (2017-12), 3 January 2018 (2018-01-03), pages 1-56, XP055716256, Retrieved from the Internet: URL:www.3gpp.org [retrieved on 2020-07-20]

## Description

### TECHNICAL FIELD

The present disclosure relates to the field of communications technology, and in particular, to a method of sending UCI and a user equipment.

### BACKGROUND

In a Long Term Evolution (LTE) system, when a User Equipment (UE) needs to send both an uplink data and Uplink Control Information (UCI) in a certain subframe, the UE may carry an uplink control signaling in the uplink data, thereby reducing the power peak-to-average ratio.

The LTE system also supports the Carrier Aggregation (CA) technology, and the UE may send the uplink data on multiple uplink carriers. When multiple uplink carriers in a subframe have the Physical Uplink Shared Channel (PUSCH) transmission at the same time, and the UE needs to transmit UCI in this subframe, the UE selects one of the PUSCHs to carry UCI, that is, the UCI is multiplexed and transmitted in selected PUSCH. The UE simply selects the PUSCH according to the carrier index, that is, multiplexing the PUSCH with the smallest carrier index to send the UCI.

The New Radio (NR) system also supports the CA and the design of multiplexing UCI in PUSCH. On one hand, the NR system supports a flexible frame structure, and the numerologies of different uplink carriers may be different. On the other hand, the NR system supports a flexible and dynamic Physical Uplink Control Channel (PUCCH) structure. The PUCCH can be a short PUCCH format of 1 to 2 symbols or a long PUCCH format of 4 to 14 symbols. Therefore, the simple carrier selection technique of LTE is not suitable for the NR. In addition, the NR may also configure a grant-free or configured scheduling PUSCH for UEs to support Ultra-reliable low latency communication (Ultra-Reliable Low Latency Communication URLLC) services, the simply following the LTE carrier selection technology may increase the processing complexity of grant-free or configured scheduling PUSCH. The 3GPP document CATR: "UE procedure for reporting control information", R1-1800762, XP51384418, 12.01.2018, discussed the UE procedure for reporting control information when the first symbol or duration is different while the PUCCH and PUSCH has overlapped symbols. A corresponding text proposal for the current 38.213 is provided in the end of the document.

### SUMMARY

The present disclosure provides a method of sending UCI and a user equipment, to support a UE to select the best PUSCH to carry UCI when there are multiple candidate PUSCH transmissions, thereby reducing a processing delay of system and reducing a peak-to-average ratio of UE.

To solve the above technical problems, the embodiments of the present disclosure are as follows. The scope of the present invention is determined only by the scope of the appended claims.

In a first aspect, a method of sending UCI is provided in some embodiments of the present disclosure, including:
in the case that an overlapping of PUCCH and PUSCH in a time domain occurs, selecting a PUSCH to carry and send UCI, based on at least one of an uplink data scheduling type and a numerology of uplink carrier;
the uplink data scheduling type comprises scheduling by Downlink Control Information, DCI, and the selecting the PUSCH to carry and send the UCI comprises:
in a case that the PUSCH is scheduled by DCI and the DCI indicates an Aperiodic Channel State Information, A-CSI, reporting or a Semi-Persistent Channel State Information, SP-CSI, reporting, selecting the PUSCH to carry and send the UCI.

In a second aspect, a UE is provided some embodiments of the present disclosure, including:
a sending module, configured to: in the case that an overlapping of PUCCH and PUSCH in a time domain occurs, select a PUSCH to carry and send UCI, based on at least one of an uplink data scheduling type and a numerology of uplink carrier;
the uplink data scheduling type comprises scheduling by Downlink Control Information, DCI, the sending module is further configured to:
   in a case that the PUSCH is scheduled by DCI and the DCI indicates an Aperiodic Channel State Information, A-CSI, reporting or a Semi-Persistent Channel State Information, SP-CSI, reporting, select the PUSCH to carry and send the UCI.

The embodiments of the present disclosure have the following beneficial effects.

According to the embodiments of the present disclosure, a PUSCH on an appropriate carrier is selected to carry UCI and send the UCI, according to an uplink data scheduling type and a numerology of uplink carrier, the UE may select the best PUSCH to carry the UCI when there are multiple candidate PUSCHs for transmission. On one hand, an uplink transmission delay may be reduced, a transmission reliability of UCI may be improved, a complexity of UE-side coding and a PUSCH multiplexing are reduced, and a peak-to-average ratio of UE may be reduced. On the other hand, an adverse effect of a multiplexing for UCI on URLLC services may be avoided, a processing delay of URLLC uplink data may be reduced, a blind detection of URLLC uplink data by a base station may be avoided, and a code rate of URLLC uplink data is prevented from decreasing.

### BRIEF DESCRIPTION OF THE DRAWINGS

FIG. 1 is a flowchart of a method of sending UCI in some embodiments of the present disclosure;
FIG. 2 to FIG. 11 are schematic views of selecting PUSCH in some embodiments of the present disclosure;
FIG. 12 is a structural block diagram of a user equipment in some embodiments of the present disclosure; and
FIG. 13 is a schematic view of a user equipment in some embodiments of the present disclosure.

### DETAILED DESCRIPTION

The technical solutions in the embodiments of the present disclosure will be described clearly and completely in conjunction with the drawings in the embodiments of the present disclosure. Obviously, scope of the invention is defined by the scope of the appended claims.

A method of sending UCI and a user equipment are provided in the present disclosure, so as to support a UE to select the best PUSCH to carry UCI when there are multiple candidate PUSCH transmissions, thereby reducing a processing delay of system and reducing a peak-to-average ratio of UE.

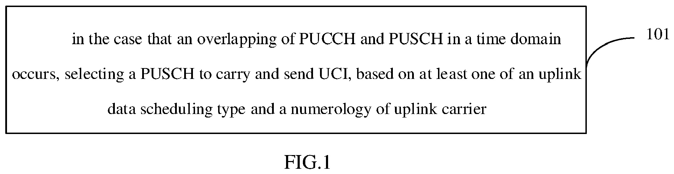

A method of sending UCI is provided in some embodiments of the present disclosure. As shown in FIG. 1, the method includes:
Step 101: in the case that an overlapping of Physical Uplink Control Channel (PUCCH) and Physical Uplink Shared Channel (PUSCH) in a time domain occurs, selecting a PUSCH to carry and send UCI, based on at least one of an uplink data scheduling type and a numerology of uplink carrier.

The numerology of uplink carrier also refer to a subcarrier spacing and a symbol duration. A method of multiplexing PUSCH to transmit UCI is provided in some embodiments of the present disclosure. Specifically, a PUSCH on a suitable carrier may be selected to carry UCI and send the UCI, according to an uplink data scheduling type, a numerology of uplink carrier, a subcarrier spacing (SCS) or a symbol duration

According to some embodiments of the present disclosure, a PUSCH on an appropriate carrier is selected to carry UCI and send the UCI, according to an uplink data scheduling type and a numerology of uplink carrier, the UE may select the best PUSCH to carry the UCI when there are multiple candidate PUSCHs for transmission. On one hand, an uplink transmission delay may be reduced, a transmission reliability of UCI may be improved, a complexity of UE-side coding and a PUSCH multiplexing are reduced, and a peak-to-average ratio of UE may be reduced. On the other hand, an adverse effect of UCI multiplexing on URLLC services may be avoided, a processing delay of URLLC uplink data may be reduced, a blind detection of URLLC uplink data by a base station may be avoided, and a code rate of URLLC uplink data is prevented from decreasing.

Specifically, when the UE is configured with multiple serving cells or uplink carriers or supplemental uplink (Supplemental Uplink, SUL), and the PUCCH and PUSCH do not perform the transmission at the same time, if the UE needs to send the PUCCH, the UE needs to select a PUSCH to multiplex the PUCCH to send the UCI.

First, it is necessary to determine in a PUCCH transmission slot whether the PUCCH and PUSCH overlap. Prior to the selecting the PUSCH to carry and send the UCI based on at least one of an uplink data scheduling type and a numerology of uplink carrier, the method further includes:
determining whether the overlapping of PUCCH and PUSCH in the time domain occurs, in a PUCCH sending slot.

The determining methods include:
Method 1: determining an overlapping based on symbols

The PUSCH and PUCCH are mapped to a reference carrier, and the PUSCH and PUCCH are scaled according to different numerologies. Optionally, the carrier of the PUCCH is the reference carrier.

For example, an SCS of the PUCCH is 15kHz, and an SCS of the PUSCH is 30kHz. The carrier of the PUCCH is taken as the reference carrier, so a 14-symbol duration PUSCH is mapped to be a 7-symbol duration on the carrier of the PUCCH.

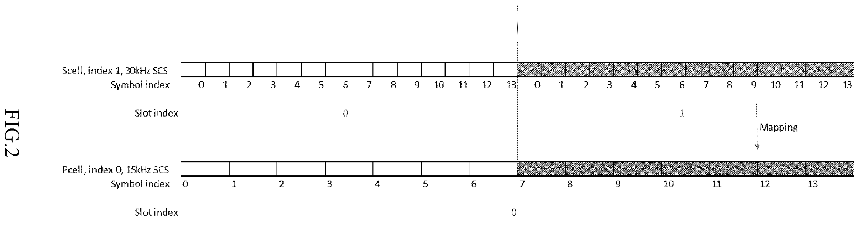

FIG. 2 is a schematic view of mapping the PUSCH with an SCS of 30kHz and a slot index of 1 to a carrier of the PUCCH with an SCS of 15kHz and a slot index of 0, where the slot index is a slot number and the symbol index is a symbol number.

After the PUSCH and PUCCH are mapped onto the reference carrier, whether the PUCCH and PUSCH overlap in a time domain may be determined according to a starting position and a duration of a symbol of the mapped PUCCH and a starting position and a duration of a symbol of the mapped PUSCH.

### Method 2: determining an overlapping based on slots

According to this method, a PUCCH is scaled according to a numerology of the PUCCH and then the PUCCH is mapped to a carrier of each PUSCH. If the starting position and duration of the symbol of the mapped PUCCH partially or completely overlap with the slot of the PUSCH, it is determined that the PUSCH and the PUCCH overlap completely.

The determining method may be predefined in the protocol, or configured through high-level parameters.

After determining whether an overlapping of PUCCH and PUSCH occurs, if the PUCCH and the PUSCH do not overlap, the UCI continues to be transmitted on the PUCCH. If the PUCCH and the PUSCH overlap in a time domain, a PUSCH is selected to carry UCI and send the UCI, according to the following method.
(1) The uplink data scheduling type includes a scheduling by DCI, the PUSCH is scheduled by DCI and the DCI indicates an Aperiodic Channel State Information (A-CSI) reporting or a Semi-Persistent Channel State Information (SP-CSI) reporting, the PUSCH scheduled by the DCI is multiplexed and the PUSCH is selected to carry and send the UCI
(2) The numerology of uplink carrier includes a transmission starting time, positons of starting symbols of the mapped PUSCH and PUCCH are compared.
   If a starting symbol index of the PUSCH is greater than or equal to a starting symbol index of the PUCCH, the PUSCH is multiplexed for transmitting the UCI. That is, in a case that a transmission starting time of the PUSCH is the same as a transmission starting time of a PUCCH or the transmission starting time of the PUSCH is later than the transmission starting time of the PUCCH, the PUSCH is multiplexed to send the UCI.
(3) The uplink data scheduling type includes grant-free or a configured scheduling. When there is no PUSCH of which a starting symbol index is greater than or equal to a starting symbol index of the PUCCH, that is, in a case that a transmission starting time of the PUSCH is earlier than a transmission starting time of a PUCCH and at least one of overlapped PUSCHs is a grant-free PUSCH or a configured scheduling PUSCH, an overlapped portion of the PUCCH is punctured or the entire UCI is discarded; in a case that overlapped PUSCHs do not include a grant-free PUSCH or a configured scheduling PUSCH, the PUCCH is transmitted, a transmission of an overlapped portion of the PUSCH is abandoned (puncturing or rate matching) or the entire PUSCH is discarded.
(4) If it is determined that the PUSCH is multiplexed to send the UCI, and there are a plurality of PUSCHs overlapped with a PUCCH which are capable of carrying the UCI, a PUSCH is selected to carry the UCI, through at least one of:
   a. a non-grant-free or non-configured scheduling PUSCH is selected, that is, a PUSCH other than the grant-free or configured scheduling PUSCH is selected to carry the UCI.
   b. in the case that the numerology of uplink carrier further includes a UCI code rate, a PUSCH which is to have a lowest UCI code rate when carrying the UCI is selected to carry the UCI, according to a weight of a β offset (Beta offset) configured or indicated by a network side.
   c. in the case that the numerology of uplink carrier further includes a transmission ending time, according to ending symbol indexes of the mapped PUSCH and PUCCH, a PUSCH with a smallest ending symbol index is selected to transmit the UCI. That is, a PUSCH with an earliest transmission ending time is selected to carry UCI.
   d. in the case that an overlapped PUSCH is transmitted in a cell or a carrier of the PUCCH, the overlapped PUSCH is multiplexed to transmit the UCI.
   e. in the case that the numerology of the uplink carrier further includes a cell index or a carrier index, a PUSCH in a cell or a carrier with a smallest index is selected and multiplexed to transmit the UCI.
   f. in the case that the numerology of the uplink carrier further includes a data portion equivalent code rate and a control bit of PUSCH, a PUSCH which is to have a lowest data portion equivalent code rate or a lowest control bit overhead when carrying the UCI is selected to carry the UCI.
   g. in the case that the numerology of uplink carrier further includes a transmission ending time and a plurality of PUSCHs overlapped with the PUCCH are capable of carrying the UCI, a PUSCH with a same transmission starting time as a transmission starting time of the PUCCH and with an earliest transmission ending time is selected to carry UCI.

The method of sending UCI in the present disclosure will be described in detail below in conjunction with specific embodiments:

### Embodiment one

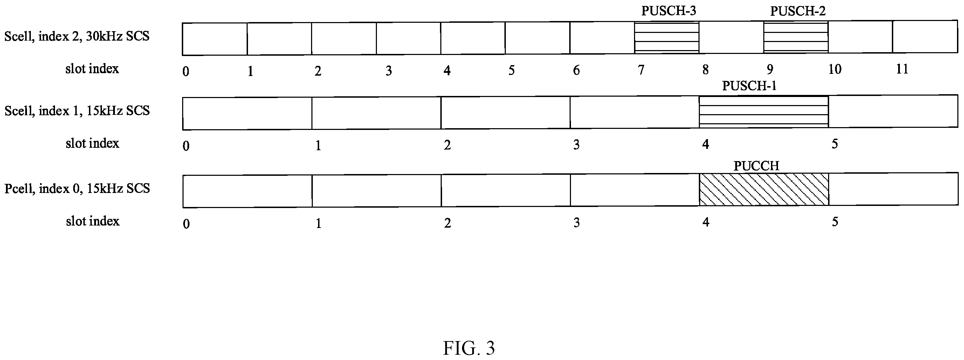

As shown in FIG. 3, there are a long PUCCH format and a PUSCH. According to the above method for determining whether PUCCH and PUSCH overlap, it can be determined that PUSCH-3 and PUCCH do not overlap, while PUSCH-1 and PUSCH-2 both overlap with the PUCCH. During transmission, PUSCH-3 is transmitted separately, PUCCH is not transmitted, and UCI is multiplexed on PUSCH-1 for transmission.

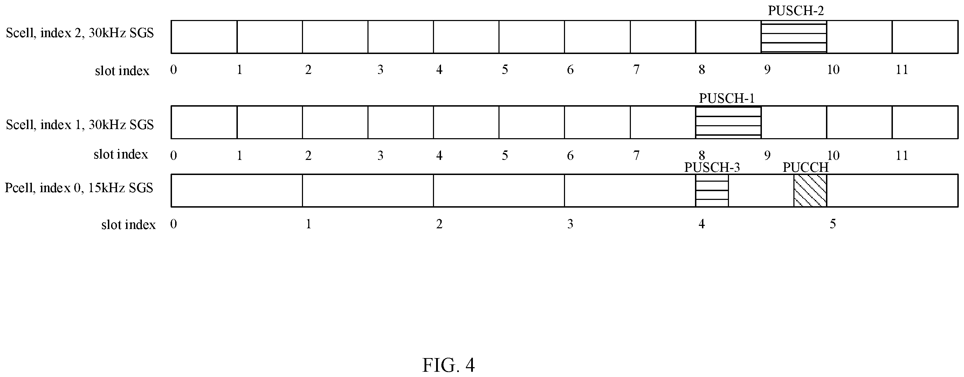

As shown in FIG. 4, there are a short PUCCH format and a PUSCH. According to the above method of determining whether PUCCH and PUSCH overlap, it can be determined that, PUSCH-2 overlaps with PUCCH, and neither PUSCH-1 nor PUSCH-3 overlaps with PUCCH. During transmission, PUSCH-1 and PUSCH-3 are transmitted separately, PUCCH is not transmitted, and UCI is multiplexed on PUSCH-2 for transmission.

### Embodiment two

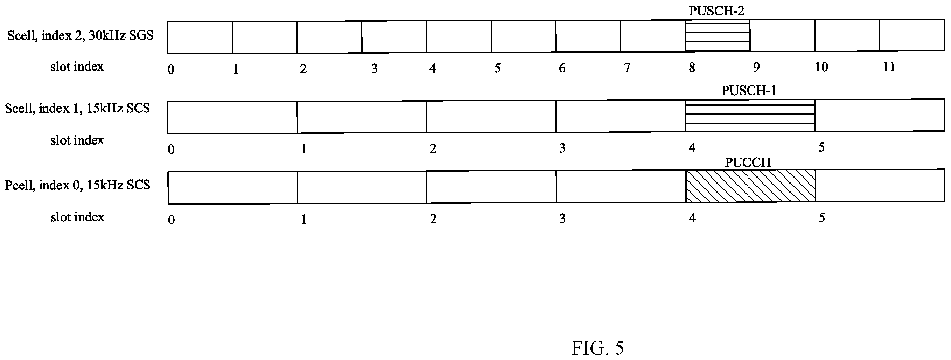

As shown in FIG. 5, when the PUCCH overlaps with multiple PUSCHs, PUCCH is not transmitted, and PUSCH-2 is multiplexed to transmit the UCI, because the starting symbol index of PUSCH-2 is equal to the starting symbol index of PUCCH, and the ending symbol index of PUSCH-2 is smaller than the ending symbol index of PUCCH-1, which may lower a transmission delay of the UCI, thereby reducing a transmission delay of the air interface.

### Embodiment three (not claimed)

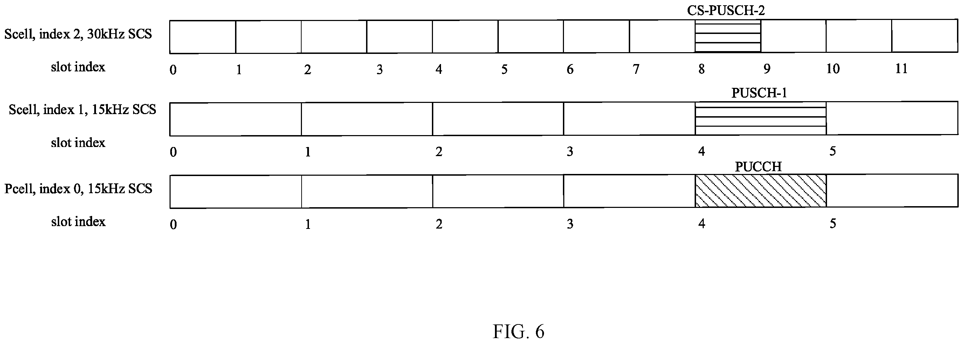

As shown in FIG. 6, if PUSCH-2 is configured as a configured scheduling PUSCH to transmit Ultra Reliable Low Latency Communications (URLLC) services, the non-configured scheduling PUSCH-1 is selected and multiplexed for the UCI transmission. In this way, the adverse effect of multiplexing PUSCH-2 to transmit the UCI on URLLC services may be avoided, a processing delay of URLLC uplink data may be reduced, a blind detection for URLLC uplink data by a network-side equipment such as base station may be avoided, and a code rate of URLLC uplink data is prevented from decreasing.

### Embodiment four

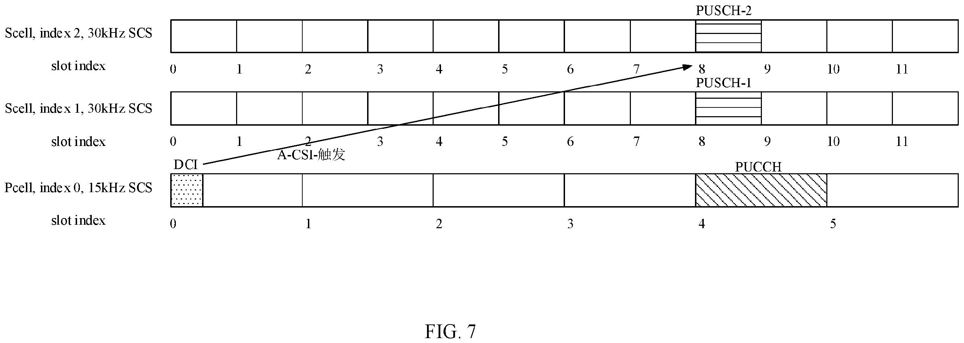

As shown in FIG. 7, when the PUCCH overlaps with multiple PUSCHs, where PUSCH-2 is scheduled by DCI, and the DCI indicates the UE to trigger an A-CSI reporting, PUSCH-2 scheduled by the DCI is selected and multiplexed to transmit the UCI.

### Embodiment five

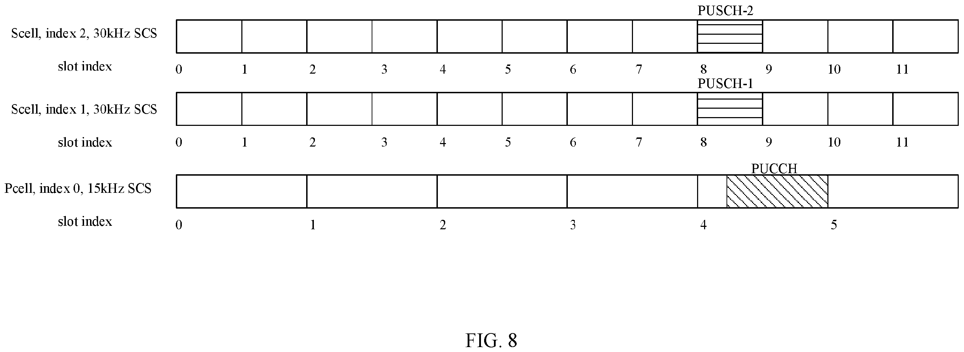

As shown in FIG. 8, when the PUCCH overlaps with multiple PUSCHs, and the starting symbol index of the overlapped PUSCH after mapping is smaller than the starting symbol index of the PUCCH, the overlapped PUSCH is discarded.

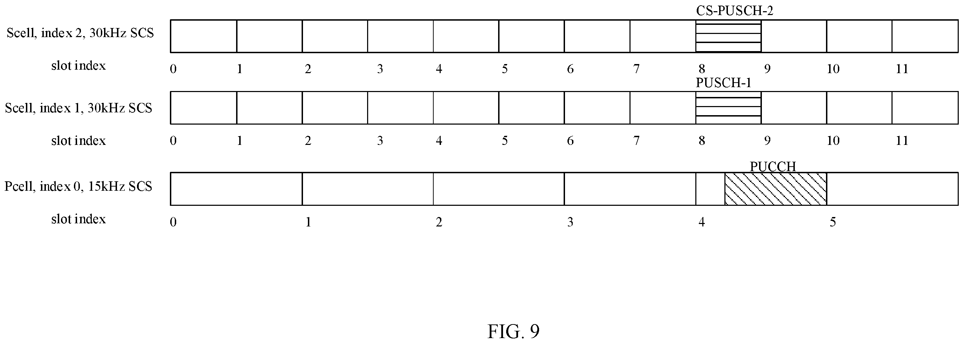

As shown in FIG. 9, if the overlapped PUSCH-2 is a configured scheduling PUSCH, the UCI is discarded.

### Embodiment six

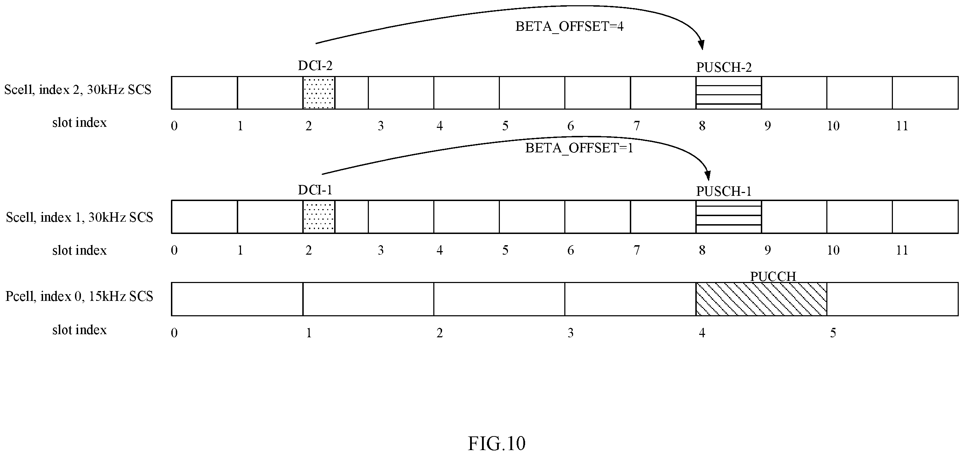

As shown in FIG. 10, when the PUCCH overlaps with multiple PUSCHs, a PUSCH which is to have a lowest UCI code rate when transmitting the UCI (i.e., PUSCH-2) is selected and multiplexed to transmit the UCI, according to a weight of a β offset (Beta offset) configured or indicated by a network side, which can ensure a reliability of UCI transmission.

### Embodiment seven

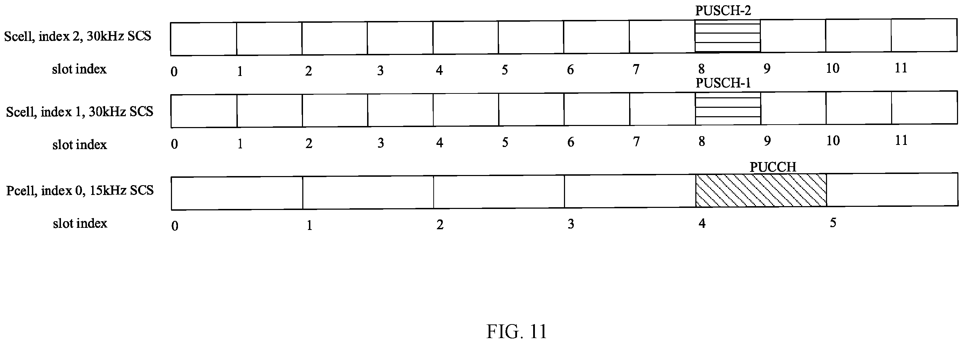

As shown in FIG. 11, when the PUCCH overlaps with multiple PUSCHs, and there are still a plurality of candidate PUSCHs after the above-mentioned multiple selections, a PUSCH in a cell or a carrier with a smallest index (i.e., PUSCH-1) is selected and multiplexed to transmit the UCI, which can reduce the complexity of UE-side coding and PUSCH multiplexing.

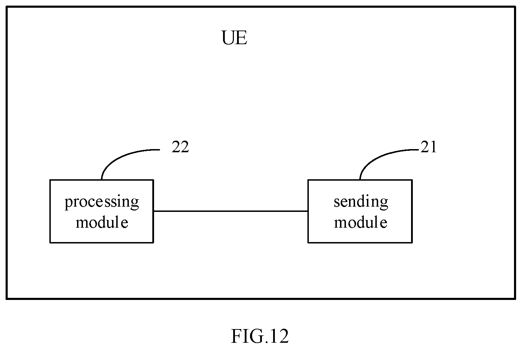

A User Equipment (UE) is further provided in some embodiments of the present disclosure, as shown in FIG. 12, the UE includes:
a sending module, configured to: in the case that an overlapping of Physical Uplink Control Channel (PUCCH) and Physical Uplink Shared Channel (PUSCH) in a time domain occurs, select a PUSCH to carry and send UCI, based on at least one of:
an uplink data scheduling type; and
a numerology of uplink carrier.

According to the embodiments of the present disclosure, a PUSCH on an appropriate carrier is selected to carry UCI and send the UCI, according to an uplink data scheduling type and a numerology of uplink carrier, the UE may select the best PUSCH to carry the UCI when there are multiple candidate PUSCHs for transmission. On one hand, an uplink transmission delay may be reduced, a transmission reliability of UCI may be improved, a complexity of UE-side coding and a PUSCH multiplexing are reduced, and a peak-to-average ratio of UE may be reduced. On the other hand, an adverse effect of a multiplexing for UCI on URLLC services may be avoided, a processing delay of URLLC uplink data may be reduced, a blind detection of URLLC uplink data by a base station may be avoided, and a code rate of URLLC uplink data is prevented from decreasing.

Optionally, as shown in FIG. 12, the UE further includes:
a processing module 22 , configured to determine whether the overlapping of PUCCH and PUSCH in the time domain occurs, in a PUCCH sending slot.

Optionally, the processing module 22 includes:
a first mapping unit, configured to map a PUCCH and a PUSCH onto a reference carrier and scale the PUCCH and the PUSCH according to the numerology of uplink carrier;
a first determining unit, configured to determine whether the overlapping of PUCCH and PUSCH in the time domain occurs, according to a starting position and a duration of a symbol of the mapped PUCCH and a starting position and a duration of a symbol of the mapped PUSCH.

The embodiment does not form part of the present invention but is an example useful for the understanding of the invention.

Optionally, the reference carrier is a carrier of the PUCCH.

Optionally, the processing module 22 includes:
a second mapping unit, configured to scale a PUCCH according to a numerology of the PUCCH and map the PUCCH to a carrier of each PUSCH;
a second determining unit, configured to: in the case that a starting position and a duration of a symbol of the mapped PUCCH at least partially overlap with a slot of the PUSCH, determine that the overlapping of PUCCH and PUSCH in the time domain occurs.

The embodiment does not form part of the present invention but is an example useful for the understanding of the invention.

The uplink data scheduling type includes a scheduling by Downlink Control Information (DCI),
the sending module 21 is further configured to: in a case that the PUSCH is scheduled by DCI and the DCI indicates an Aperiodic Channel State Information (A-CSI) reporting or a Semi-Persistent Channel State Information (SP-CSI) reporting, select the PUSCH to carry and send the UCI.

Optionally, the numerology of uplink carrier includes a transmission starting time,
the sending module is further configured to: in a case that a transmission starting time of the PUSCH is the same as a transmission starting time of a PUCCH or the transmission starting time of the PUSCH is later than the transmission starting time of the PUCCH, multiplex the PUSCH to send the UCI.

Optionally, the uplink data scheduling type includes grant-free or a configured scheduling,
the sending module is further configured to: in a case that a transmission starting time of the PUSCH is earlier than a transmission starting time of a PUCCH and at least one of overlapped PUSCHs is a grant-free PUSCH or a configured scheduling PUSCH, puncture an overlapped portion of the PUCCH or discard the UCI; in a case that overlapped PUSCHs do not include a grant-free PUSCH or a configured scheduling PUSCH, transmit the PUCCH, abandon a transmission of an overlapped portion of the PUSCH or discard the entire PUSCH.

Optionally, in the case that the PUSCH is multiplexed to send the UCI and a plurality of PUSCHs overlapped with a PUCCH are capable of carrying the UCI, the sending module 21 is further configured to select the PUSCH to carry the UCI, through at least one of:
selecting a PUSCH other than a grant-free PUSCH or a configured scheduling PUSCH to carry UCI;
in the case that the numerology of uplink carrier further includes a UCI code rate, selecting the PUSCH which is to have a lowest UCI code rate when carrying the UCI to carry the UCI, according to a weight of a β offset configured or indicated by a network side;
in the case that the numerology of the uplink carrier further includes a data portion equivalent code rate and a control bit of PUSCH, selecting the PUSCH which is to have a lowest data portion equivalent code rate or a lowest control bit overhead when carrying the UCI to carry the UCI;
in the case that the numerology of uplink carrier further includes a transmission ending time, selecting the PUSCH with an earliest transmission ending time to carry UCI;
in the case that an overlapped PUSCH is transmitted in a cell or a carrier of the PUCCH, selecting the overlapped PUSCH to carry the UCI;
in the case that the numerology of the uplink carrier further includes a cell index or a carrier index, selecting the PUSCH in a cell or a carrier with a smallest index to carry the UCI;
in the case that the numerology of uplink carrier further includes a transmission ending time and a plurality of PUSCHs overlapped with the PUCCH are capable of carrying the UCI, selecting the PUSCH with a same transmission starting time as a transmission starting time of the PUCCH and with an earliest transmission ending time to carry UCI.

A UE is further provided in some embodiments of the present disclosure, including: a memory, a processor and a computer program stored in the memory and executable on the processor, and the processor executes the computer program to perform the method of sending UCI hereinabove. The embodiment does not form part of the present invention but is an example useful for the understanding of the invention.

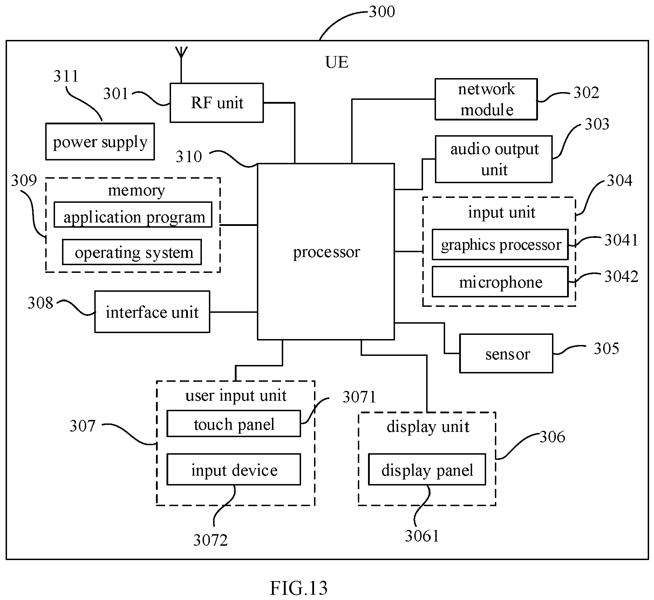

FIG. 13 is a schematic diagram of the hardware structure of a user equipment implementing various embodiments of the present disclosure. Referring to FIG. 13, the user equipment 300 includes but is not limited to: a radio frequency unit 301, a network module 302, an audio output unit 303, an input unit 304, a sensor 305, a display unit 306, a user input unit 307, an interface unit 308, a memory 309, a process and power supply 311. Those skilled in the art may understand that the terminal structure shown in FIG. 13 does not constitute a limitation on the terminal, and the terminal may include more or fewer components than those illustrated, or combine certain components, or arrange different components. In the embodiments of the present disclosure, the terminal includes but is not limited to a mobile phone, a tablet computer, a notebook computer, a palmtop computer, a vehicle-mounted terminal, a wearable device and a pedometer.

The processor 310 is configured to: in the case that an overlapping of Physical Uplink Control Channel (PUCCH) and Physical Uplink Shared Channel (PUSCH) in a time domain occurs, select a PUSCH to carry and send UCI, based on at least one of an uplink data scheduling type and a numerology of uplink carrier.

Optionally, the processor 310 is further configured to: determine whether the overlapping of PUCCH and PUSCH in the time domain occurs, in a PUCCH sending slot.

Optionally, the processor 310 is further configured to: map a PUCCH and a PUSCH onto a reference carrier and scale the PUCCH and the PUSCH according to the numerology of uplink carrier; determine whether the overlapping of PUCCH and PUSCH in the time domain occurs, according to a starting position and a duration of a symbol of the mapped PUCCH and a starting position and a duration of a symbol of the mapped PUSCH.

Optionally, the reference carrier is a carrier of the PUCCH.

Optionally, the processor 310 is further configured to: scale a PUCCH according to a numerology of the PUCCH and map the PUCCH to a carrier of each PUSCH; in the case that a starting position and a duration of a symbol of the mapped PUCCH at least partially overlap with a slot of the PUSCH, determine that the overlapping of PUCCH and PUSCH in the time domain occurs.

The, uplink data scheduling type includes a scheduling by Downlink Control Information (DCI),
the processor 310 is further configured to: in a case that the PUSCH is scheduled by DCI and the DCI indicates an Aperiodic Channel State Information (A-CSI) reporting or a Semi-Persistent Channel State Information (SP-CSI) reporting, select the PUSCH to carry and send the UCI.

Optionally, the numerology of uplink carrier includes a transmission starting time,
the processor 310 is further configured to: in a case that a transmission starting time of the PUSCH is the same as a transmission starting time of a PUCCH or the transmission starting time of the PUSCH is later than the transmission starting time of the PUCCH, multiplex the PUSCH to send the UCI.

Optionally, the uplink data scheduling type includes grant-free or a configured scheduling,
the processor 310 is further configured to: in a case that a transmission starting time of the PUSCH is earlier than a transmission starting time of a PUCCH and at least one of overlapped PUSCHs is a grant-free PUSCH or a configured scheduling PUSCH, puncture an overlapped portion of the PUCCH or discard the UCI; in a case that overlapped PUSCHs do not include a grant-free PUSCH or a configured scheduling PUSCH, transmit the PUCCH, abandon a transmission of an overlapped portion of the PUSCH or discard the entire PUSCH.

The processor 310 is further configured to: in the case that the PUSCH is multiplexed to send the UCI and a plurality of PUSCHs overlapped with a PUCCH are capable of carrying the UCI, select the PUSCH to carry the UCI, through at least one of:
selecting a PUSCH other than a grant-free PUSCH or a configured scheduling PUSCH to carry UCI;
in the case that the numerology of uplink carrier further includes a UCI code rate, selecting the PUSCH which is to have a lowest UCI code rate when carrying the UCI to carry the UCI, according to a weight of a β offset configured or indicated by a network side;
in the case that the numerology of the uplink carrier further includes a data portion equivalent code rate and a control bit of PUSCH, selecting the PUSCH which is to have a lowest data portion equivalent code rate or a lowest control bit overhead when carrying the UCI to carry the UCI;
in the case that the numerology of uplink carrier further includes a transmission ending time, selecting the PUSCH with an earliest transmission ending time to carry UCI;
in the case that an overlapped PUSCH is transmitted in a cell or a carrier of the PUCCH, selecting the overlapped PUSCH to carry the UCI;
in the case that the numerology of the uplink carrier further includes a cell index or a carrier index, selecting the PUSCH in a cell or a carrier with a smallest index to carry the UCI;
in the case that the numerology of uplink carrier further includes a transmission ending time and a plurality of PUSCHs overlapped with the PUCCH are capable of carrying the UCI, selecting the PUSCH with a same transmission starting time as a transmission starting time of the PUCCH and with an earliest transmission ending time to carry UCI.

It should be understood that, in the embodiment of the present disclosure, the radio frequency unit 301 can be used for receiving and sending signals in the process of sending and receiving information or talking. Specifically, the downlink data from the base station is received and processed by the processor 310; in addition, Uplink data is sent to the base station. Generally, the radio frequency unit 301 includes, but is not limited to, an antenna, at least one amplifier, a transceiver, a coupler, a low noise amplifier, a duplexer, and the like. In addition, the radio frequency unit 301 can also communicate with the network and other devices through a wireless communication system.

The terminal provides users with wireless broadband Internet access through the network module 302, such as helping users to send and receive e-mail, browse web pages, and access streaming media.

The audio output unit 303 can convert the audio data received by the radio frequency unit 301 or the network module 302 or stored in the memory 309 into audio signals and output them as sounds. Moreover, the audio output unit 303 may also provide audio output related to a specific function performed by the user equipment 300 (for example, call signal reception sound, message reception sound, etc.). The audio output unit 303 includes a speaker, a buzzer, a receiver, and the like.

The input unit 304 is used to receive audio or video signals. The input unit 304 may include a Graphics Processing Unit (GPU) 3041 and a microphone 3042, and the graphics processor 3041 may image a still picture or video obtained by an image capture device (such as a camera) in a video capture mode or an image capture mode Data is processed. The processed image frame may be displayed on the display unit 306. The image frame processed by the graphics processor 3041 may be stored in the memory 309 (or other storage medium) or sent via the radio frequency unit 301 or the network module 302. The microphone 3042 can receive sound, and can process such sound into audio data. The processed audio data can be converted into a format that can be sent to the mobile communication base station via the radio frequency unit 301 for output in the case of a telephone call mode.

The user equipment 300 also includes at least one sensor 305, such as a light sensor, a motion sensor, and other sensors. Specifically, the light sensor includes an ambient light sensor and a proximity sensor. The ambient light sensor can adjust the brightness of the display panel 3061 according to the brightness of the ambient light. The proximity sensor can close the display panel 3061 and/or the backlight when the user equipment 300 is moved to the ear. As a kind of motion sensor, the accelerometer sensor can detect the magnitude of acceleration in various directions (usually three-axis), and can detect the magnitude and direction of gravity when stationary, and can be used to identify terminal posture (such as horizontal and vertical screen switching, related games, Magnetometer attitude calibration), vibration recognition related functions (such as pedometer, percussion), etc.; sensor 305 can also include fingerprint sensor, pressure sensor, iris sensor, molecular sensor, gyroscope, barometer, hygrometer, thermometer, infrared Sensors, etc., will not be repeated here.

The display unit 306 is used to display information input by the user or information provided to the user. The display unit 306 may include a display panel 3061, and the display panel 3061 may be configured in the form of a liquid crystal display (LCD), an organic light-emitting diode (OLED), etc.

The user input unit 307 can be used to receive input numeric or character information, and generate key signal input related to user settings and function control of the terminal. Specifically, the user input unit 307 includes a touch panel 3071 and other input devices 3072. The touch panel 3071, also known as a touch screen, can collect user's touch operations on or near it (for example, the user uses any suitable objects or accessories such as fingers, stylus, etc. on or near the touch panel 3071 operating). The touch panel 3071 may include two parts: a touch detection device and a touch controller. Among them, the touch detection device detects the user's touch position, and detects the signal brought by the touch operation, and transmits the signal to the touch controller; the touch controller receives the touch information from the touch detection device, converts it into contact coordinates, and then sends it To the processor 310, the command sent by the processor 310 is received and executed. In addition, the touch panel 3071 can be implemented in various types such as resistive, capacitive, infrared, and surface acoustic waves. In addition to the touch panel 3071, the user input unit 307 may also include other input devices 3072. Specifically, other input devices 3072 may include, but are not limited to, a physical keyboard, function keys (such as volume control buttons, switch buttons, etc.), trackball, mouse, and joystick, which will not be repeated here.

Further, the touch panel 3071 can be overlaid on the display panel 3061. When the touch panel 3071 detects a touch operation on or near it, it is transmitted to the processor 310 to determine the type of the touch event. The type of event provides corresponding visual output on the display panel 3061. Although in FIG. 13, the touch panel 3071 and the display panel 3061 are used as two independent components to realize the input and output functions of the terminal, in some embodiments, the touch panel 3071 and the display panel 3061 can be integrated. Realize the input and output functions of the terminal, which are not limited here.

The interface unit 308 is an interface for connecting an external device with the user equipment 300. For example, the external device may include a wired or wireless headset port, an external power supply (or battery charger) port, a wired or wireless data port, a memory card port, a port for connecting a device with an identification module, audio input/output (I/O) port, video I/O port, headphone port, etc. The interface unit 308 may be used to receive input (for example, data information, power, etc.) from an external device and transmit the received input to one or more elements in the user equipment 300 or may be used to connect to the user equipment 300 and external Transfer data between devices.

The memory 309 can be used to store software programs and various data. The memory 309 may mainly include a program storage area and a data storage area. The program storage area may store an operating system, an application program required by at least one function (such as a sound playback function, an image playback function, etc.), etc. The data storage area can store data (such as audio data, phone book, etc.) created by the use of mobile phones. In addition, the memory 309 may include a high-speed random access memory, and may also include a non-volatile memory, such as at least one magnetic disk storage device, a flash memory device, or other volatile solid-state storage devices.

The processor 310 is the control center of the terminal. It uses various interfaces and lines to connect various parts of the entire terminal. It executes by running or executing software programs and/or modules stored in the memory 309, and calling data stored in the memory 309. Various functions of the terminal and processing data, so as to monitor the terminal as a whole. The processor 310 may include one or more processing units; the processor 310 may integrate an application processor and a modem processor, where the application processor mainly processes the operating system, user interface, and application programs. The processor mainly deals with wireless communication. It can be understood that the foregoing modem processor may not be integrated into the processor 310.

The user equipment 300 may further include a power supply 311 (such as a battery) that supplies power to various components. Preferably, the power supply 311 may be logically connected to the processor 310 through a power management system, so as to manage charging, discharging, and power consumption management through the power management system and other functions.

In addition, the user equipment 300 includes some function modules not shown, which will not be repeated here.

A computer-readable storage medium is further provided in some embodiments of the present disclosure, where a computer program is stored in the computer-readable storage medium, and a processor executes the computer program to perform the method of sending UCI hereinabove. The embodiment does not form part of the present invention but is an example useful for the understanding of the invention.

The computer-readable storage medium in the present disclosure may be a volatile computer-readable storage medium or a non-volatile computer-readable storage medium, or includes both a volatile computer-readable storage medium and a non-volatile computer-readable storage medium.

It can be understood that the embodiments described herein may be implemented in hardware, software, firmware, middleware, microcode, or a combination thereof. For hardware implementation, the processing unit can be implemented in one or more application specific integrated circuits (ASIC), Digital Signal Processing (DSP), DSP Device (DSPD), Programmable Logic Device, (PLD), Field-Programmable Gate Array (FPGA), general-purpose processors, controllers, microcontrollers, microprocessors, and other electronic units for performing the functions described in this application or a combination thereof.

For software implementation, the techniques described herein may be implemented through modules (e.g., procedures, functions, etc.) that perform the functions described herein. The software codes can be stored in the memory and executed by the processor. The memory can be implemented in the processor or external to the processor.

The embodiments in the present disclosure are described in a progressive manner, and each embodiment focuses on the differences from other embodiments, and the same or similar parts between the various embodiments can be referred to each other.

Those skilled in the art should understand that the embodiments of the embodiments of the present disclosure may be provided as methods, devices, or computer program products. Therefore, the embodiments of the present disclosure may adopt the form of a complete hardware embodiment, a complete software embodiment, or an embodiment combining software and hardware. Moreover, embodiments of the present disclosure may take the form of computer program products implemented on one or more computer usable storage media (including but not limited to disk storage, CD-ROM, optical storage, etc.) containing computer usable program code.

The embodiments of the present disclosure are described with reference to the flowcharts and/or block diagrams of the methods, terminal devices (systems), and computer program products according to the embodiments of the present disclosure. It should be understood that each process and/or block in the flowchart and/or block diagram, and the combination of processes and/or blocks in the flowchart and/or block diagram can be implemented by computer program instructions. These computer program instructions can be provided to the processors of general-purpose computers, special-purpose computers, embedded processors, or other programmable data processing terminal equipment to generate a machine, so that instructions executed by the processor of the computer or other programmable data processing terminal equipment. A device for realizing the functions specified in one flow or multiple flows in the flowchart and/or one block or multiple blocks in the block diagram is generated.

These computer program instructions may also be stored in a computer-readable memory that can guide a computer or other programmable data processing terminal device to work in a specific manner, so that the instructions stored in the computer-readable memory produce an article of manufacture including an instruction device, which The instruction device realizes the functions specified in one process or multiple processes in the flowchart and/or one block or multiple blocks in the block diagram.

These computer program instructions can also be loaded on a computer or other programmable data processing terminal equipment, so that a series of operation steps are executed on the computer or other programmable terminal equipment to produce computer-implemented processing, so that the computer or other programmable terminal equipment The instructions executed above provide steps for implementing the functions specified in one block or multiple blocks of the flowchart one flow or multiple flows and/or block diagrams.

It should also be noted that in the present disclosure, relational terms such as first and second are used only to distinguish one entity or operation from another entity or operation, and do not necessarily require or imply that there is any such actual relationship or order between these entities or operations. Moreover, the terms "include", "including" or any other variants thereof are intended to cover non-exclusive inclusion, so that a process, method, article or terminal device including a series of elements not only includes those elements, but also includes those that are not explicitly listed. Other elements listed, or also include elements inherent to this process, method, article or terminal device. If there are no more restrictions, the element defined by the sentence "including a..." does not exclude the existence of other same elements in the process, method, article or terminal device that includes the element.

## Claims

1. A method of sending Uplink Control Information, UCI, comprising:
in the case that an overlapping of Physical Uplink Control Channel, PUCCH and Physical Uplink Shared Channel, PUSCH, in a time domain occurs, selecting (101) a PUSCH to carry and send UCI, based on at least one of an uplink data scheduling type and a numerology of uplink carrier;
wherein the uplink data scheduling type comprises scheduling by Downlink Control Information, DCI, and the selecting the PUSCH to carry and send the UCI comprises:
in a case that the PUSCH is scheduled by DCI and the DCI indicates an Aperiodic Channel State Information, A-CSI, reporting or a Semi-Persistent Channel State Information, SP-CSI, reporting, selecting the PUSCH to carry and send the UCI.

2. The method of sending UCI according to claim 1, wherein prior to the selecting (101) the PUSCH to carry and send the UCI based on at least one of an uplink data scheduling type and a numerology of uplink carrier, the method further comprises:
determining whether the overlapping of PUCCH and PUSCH in the time domain occurs, in a PUCCH sending slot.

3. The method of sending UCI according to claim 2, wherein the determining whether the overlapping of PUCCH and PUSCH in the time domain occurs comprises:
mapping a PUCCH and a PUSCH onto a reference carrier, and scaling the PUCCH and the PUSCH according to the numerology of uplink carrier;
determining whether the overlapping of PUCCH and PUSCH in the time domain occurs, according to a starting position and a duration of a symbol of the mapped PUCCH and a starting position and a duration of a symbol of the mapped PUSCH.

4. The method of sending UCI according to claim 3, wherein the reference carrier is a carrier of the PUCCH.

5. The method of sending UCI according to claim 2, wherein the determining whether the overlapping of PUCCH and PUSCH in the time domain occurs comprises:
scaling a PUCCH according to a numerology of the PUCCH and mapping the PUCCH to a carrier of each PUSCH;
in the case that a starting position and a duration of a symbol of the mapped PUCCH at least partially overlap with a slot of the PUSCH, determining that the overlapping of PUCCH and PUSCH in the time domain occurs.

6. The method of sending UCI according to any one of claims 1 to 5, wherein the numerology of uplink carrier comprises a transmission starting time, the selecting the PUSCH to carry and send the UCI comprises:
in a case that a transmission starting time of the PUSCH is the same as a transmission starting time of a PUCCH or the transmission starting time of the PUSCH is later than the transmission starting time of the PUCCH, multiplexing the PUSCH to send the UCI.

7. The method of sending UCI according to any one of claims 1 to 5, wherein the uplink data scheduling type comprises grant-free or a configured scheduling, the selecting the PUSCH to carry and send the UCI comprises:
in a case that a transmission starting time of the PUSCH is earlier than a transmission starting time of a PUCCH and at least one of overlapped PUSCHs is a grant-free PUSCH or a configured scheduling PUSCH, puncturing an overlapped portion of the PUCCH or discarding the UCI;
in a case that overlapped PUSCHs do not include a grant-free PUSCH or a configured scheduling PUSCH, transmitting the PUCCH, abandoning a transmission of an overlapped portion of the PUSCH or discarding the entire PUSCH.

8. The method of sending UCI according to any one of claims 1, 6, 7, wherein in the case that the PUSCH is multiplexed to send the UCI and a plurality of PUSCHs overlapped with a PUCCH are capable of carrying the UCI, selecting the PUSCH to carry the UCI, through at least one of:
selecting a PUSCH other than a grant-free PUSCH or a configured scheduling PUSCH to carry UCI;
in the case that the numerology of uplink carrier further comprises a UCI code rate, selecting the PUSCH which is to have a lowest UCI code rate when carrying the UCI to carry the UCI, according to a weight of a β offset configured or indicated by a network side;
in the case that the numerology of uplink carrier further comprises a data portion equivalent code rate and a control bit of PUSCH, selecting the PUSCH which is to have a lowest data portion equivalent code rate or a lowest control bit overhead when carrying the UCI to carry the UCI;
in the case that the numerology of uplink carrier further comprises a transmission ending time, selecting the PUSCH with an earliest transmission ending time to carry UCI;
in the case that an overlapped PUSCH is transmitted in a cell or a carrier of the PUCCH, selecting the overlapped PUSCH to carry the UCI;
in the case that the numerology of uplink carrier further comprises a cell index or a carrier index, selecting the PUSCH in a cell or a carrier with a smallest index to carry the UCI;
in the case that the numerology of uplink carrier further comprises a transmission ending time and a plurality of PUSCHs overlapped with the PUCCH are capable of carrying the UCI, selecting the PUSCH with a same transmission starting time as a transmission starting time of the PUCCH and with an earliest transmission ending time to carry UCI.

9. A User Equipment, UE, comprising:
a sending module (21), configured to: in the case that an overlapping of Physical Uplink Control Channel, PUCCH, and Physical Uplink Shared Channel, PUSCH, in a time domain occurs, select a PUSCH to carry and send UCI, based on at least one of an uplink data scheduling type and a numerology of uplink carrier;
wherein the uplink data scheduling type comprises scheduling by Downlink Control Information, DCI, the sending module (21) is further configured to:
in a case that the PUSCH is scheduled by DCI and the DCI indicates an Aperiodic Channel State Information, A-CSI, reporting or a Semi-Persistent Channel State Information, SP-CSI, reporting, select the PUSCH to carry and send the UCI.

10. The UE according to claim 9, further comprising:
a processing module (22), configured to determine whether the overlapping of PUCCH and PUSCH in the time domain occurs, in a PUCCH sending slot.

11. The UE according to any one of claims 9 to 10, wherein the numerology of uplink carrier comprises a transmission starting time, the sending module (21) is further configured to:
in a case that a transmission starting time of the PUSCH is the same as a transmission starting time of a PUCCH or the transmission starting time of the PUSCH is later than the transmission starting time of the PUCCH, multiplex the PUSCH to send the UCI.

12. The UE according to any one of claims 9 to 10, wherein the uplink data scheduling type comprises grant-free or a configured scheduling, the sending module (21) is further configured to:
in a case that a transmission starting time of the PUSCH is earlier than a transmission starting time of a PUCCH and at least one of overlapped PUSCHs is a grant-free PUSCH or a configured scheduling PUSCH, puncture an overlapped portion of the PUCCH or discard the UCI;
in a case that overlapped PUSCHs do not include a grant-free PUSCH or a configured scheduling PUSCH, transmit the PUCCH, abandon a transmission of an overlapped portion of the PUSCH or discard the entire PUSCH.

13. The UE according to any one of claims 9, 11, 12, wherein in the case that the PUSCH is multiplexed to send the UCI and a plurality of PUSCHs overlapped with a PUCCH are capable of carrying the UCI, the sending module (21) is further configured to select the PUSCH to carry the UCI, through at least one of:
selecting a PUSCH other than a grant-free PUSCH or a configured scheduling PUSCH to carry UCI;
in the case that the numerology of uplink carrier further comprises a UCI code rate, selecting the PUSCH which is to have a lowest UCI code rate when carrying the UCI to carry the UCI, according to a weight of a β offset configured or indicated by a network side;
in the case that the numerology of uplink carrier further comprises a data portion equivalent code rate and a control bit of PUSCH, selecting the PUSCH which is to have a lowest data portion equivalent code rate or a lowest control bit overhead when carrying the UCI to carry the UCI;
in the case that the numerology of uplink carrier further comprises a transmission ending time, selecting the PUSCH with an earliest transmission ending time to carry UCI;
in the case that an overlapped PUSCH is transmitted in a cell or a carrier of the PUCCH, selecting the overlapped PUSCH to carry the UCI;
in the case that the numerology of uplink carrier further comprises a cell index or a carrier index, selecting the PUSCH in a cell or a carrier with a smallest index to carry the UCI;
in the case that the numerology of uplink carrier further comprises a transmission ending time and a plurality of PUSCHs overlapped with the PUCCH are capable of carrying the UCI, selecting the PUSCH with a same transmission starting time as a transmission starting time of the PUCCH and with an earliest transmission ending time to carry UCI.

## Patentansprüche

1. Verfahren zum Senden von Uplink-Steuerinformationen, UCI, umfassend:
in dem Fall, dass eine Überlappung von Physical Uplink Control Channel, PUCCH und Physical Uplink Shared Channel, PUSCH, in einer Zeitdomäne auftritt, Auswählen (101) eines PUSCH, um UCI zu tragen und zu senden, basierend auf mindestens einem von einem Uplink-Datenplanungstyp und einer Numerologie des Uplink-Trägers;
wobei der Uplink-Datenplanungstyp das Planen durch Downlink Control Information, DCI, umfasst und das Auswählen des PUSCH, um den UCI zu tragen und zu senden, Folgendes umfasst:
in dem Fall, dass der PUSCH vom DCI geplant wird und der DCI Aperiodic Channel State Information, A-CSI, Reporting, oder Semi-Persistent Channel State Information, SP-CSI, Reporting, anzeigt, Auswählen von PUSCH zum Tragen und Senden der UCI.

2. Verfahren zum Senden von UCI nach Anspruch 1, wobei das Verfahren vor dem Auswählen (101) des PUSCH, um den UCI zu tragen und zu senden, basierend auf mindestens einem von einem Uplink-Datenplanungstyp und einer Numerologie des Uplink-Trägers, ferner umfasst:
Bestimmen, ob die Überlappung von PUCCH und PUSCH in der Zeitdomäne auftritt, in einem PUCCH-Sendeschlitz.

3. Verfahren zum Senden von UCI nach Anspruch 2, wobei das Bestimmen, ob die Überlappung von PUCCH und PUSCH in der Zeitdomäne auftritt, Folgendes umfasst:
Abbilden eines PUCCH und eines PUSCH auf einen Referenzträger, und Skalieren des PUCCH und des PUSCH gemäß der Numerologie des Uplink-Trägers;
Bestimmen, ob die Überlappung von PUCCH und PUSCH in der Zeitdomäne auftritt, gemäß einer Startposition und einer Dauer eines Symbols des abgebildeten PUCCH und einer Startposition und einer Dauer eines Symbols des abgebildeten PUSCH.

4. Verfahren zum Senden von UCI nach Anspruch 3, wobei der Referenzträger ein Träger des PUCCH ist.

5. Verfahren zum Senden von UCI nach Anspruch 2, wobei das Bestimmen, ob die Überlappung von PUCCH und PUSCH in der Zeitdomäne auftritt, Folgendes umfasst:
Skalieren eines PUCCH gemäß einer Numerologie des PUCCH und Abbilden des PUCCH zu einem Träger jedes PUSCH;
in dem Fall, dass sich eine Startposition und eine Dauer eines Symbols des abgebildeten PUCCH zumindest teilweise mit einem Slot des PUSCH überlappen, Feststellen, dass die Überlappung von PUCCH und PUSCH in der Zeitdomäne auftritt.

6. Verfahren zum Senden von UCI nach einem der Ansprüche 1 bis 5, wobei die Numerologie des Uplink-Trägers eine Übertragungsstartzeit umfasst, wobei das Auswählen des PUSCH zum Tragen und Senden der UCI Folgendes umfasst: in dem Fall, dass eine Übertragungsstartzeit des PUSCH gleich einer Übertragungsstartzeit eines PUCCH ist oder die Übertragungsstartzeit des PUSCH nach der Übertragungsstartzeit des PUCCH liegt, Multiplexen des PUSCH zum Senden von UCI.

7. Verfahren zum Senden von UCI nach einem der Ansprüche 1 bis 5, wobei der Uplink-Datenplanungstyp eine Grant-Free- oder eine konfigurierte Planung umfasst, wobei das Auswählen von PUSCH zum Tragen und Senden der UCI Folgendes umfasst:
in dem Fall, dass eine Übertragungsstartzeit des PUSCH vor einer Übertragungsstartzeit eines PUCCH liegt und mindestens einer von überlappten PUSCHs ein Grant-Free-PUSCH oder ein konfigurierter Planungs-PUSCH ist, Durchstechen eines überlappten Abschnitts des PUCCH oder Verwerfen des UCI;
in dem Fall, dass überlappte PUSCHs keinen Grant-Free-PUSCH oder einen konfigurierten Planungs-PUSCH enthalten, Übertragen des PUCCH, Abbrechen einer Übertragung eines überlappten Abschnitts des PUSCH oder Verwerfen des gesamten PUSCH.

8. Verfahren zum Senden von UCI nach einem der Ansprüche 1, 6, 7, wobei in dem Fall, dass der PUSCH gemultiplext wird, um den UCI zu senden, und eine Vielzahl von PUSCHs, die mit einem PUCCH überlappt sind, in der Lage sind, den UCI zu tragen, Auswählen von PUSCH, um den UCI zu tragen, durch mindestens eines von:
Auswählen eines anderen PUSCH als eines Grant-Free-PUSCH oder eines konfigurierten Planungs-PUSCH, um UCI zu tragen;
in dem Fall, dass die Numerologie des Uplink-Trägers ferner eine UCI-Code-Rate umfasst, Auswählen des PUSCH, der eine niedrigste UCI-Code-Rate aufweisen soll, wenn er die UCI trägt, um die UCI zu tragen, gemäß einer Gewichtung eines β-Versatzes, der durch eine Netzwerkseite konfiguriert oder angezeigt wird;
in dem Fall, dass die Numerologie des Uplink-Trägers ferner eine Datenabschnitt-äquivalente Code-Rate und ein Steuerbit von PUSCH umfasst, Auswählen des PUSCH, der eine niedrigste Datenabschnitt-äquivalente Code-Rate oder einen niedrigsten Steuerbit-Overhead aufweisen soll, wenn er die UCI trägt, um die UCI zu tragen;
in dem Fall, dass die Numerologie des Uplink-Trägers ferner eine Übertragungsendzeit umfasst, Auswählen des PUSCH mit einer frühesten Übertragungsendzeit, um UCI zu tragen;
in dem Fall, dass ein überlappter PUSCH in einer Zelle oder einem Träger des PUCCH übertragen wird, Auswählen des überlappten PUSCH, um die UCI zu tragen;
in dem Fall, dass die Numerologie des Uplink-Trägers ferner einen Zellindex oder einen Trägerindex umfasst, Auswählen des PUSCH in einer Zelle oder einem Träger mit einem kleinsten Index, um den UCI zu tragen;
in dem Fall, dass die Numerologie des Uplink-Trägers ferner eine Übertragungsendzeit umfasst und eine Vielzahl von PUSCHs, die mit dem PUCCH überlappt sind, in der Lage sind, den UCI zu tragen, Auswählen des PUSCH mit derselben Übertragungsstartzeit wie eine Übertragungsstartzeit des PUCCH und mit einer frühesten Übertragungsendzeit, um UCI zu tragen.

9. Benutzergerät, UE, umfassend:
ein Sendemodul (21), das konfiguriert ist, um: in dem Fall, dass eine Überlappung von Physical Uplink Control Channel, PUCCH, und Physical Uplink Shared Channel, PUSCH, in einer Zeitdomäne auftritt, Auswählen eines PUSCH, um UCI zu tragen und zu senden, basierend auf mindestens einem von einem Uplink-Datenplanungstyp und einer Numerologie des Uplink-Trägers;
wobei der Uplink-Datenplanungstyp das Planen durch Downlink Control Information (DCI) umfasst, wobei das Sendemodul (21) ferner dazu konfiguriert ist:
in dem Fall, dass der PUSCH vom DCI geplant wird und der DCI Aperiodic Channel State Information, A-CSI, Reporting, oder Semi-Persistent Channel State Information, SP-CSI, Reporting, anzeigt, Auswählen von PUSCH zum Tragen und Senden der UCI.

10. UE nach Anspruch 9, ferner umfassend:
ein Verarbeitungsmodul (22), das konfiguriert ist, um zu bestimmen, ob die Überlappung von PUCCH und PUSCH in der Zeitdomäne auftritt, in einem PUCCH-Sendeslot.

11. UE nach einem der Ansprüche 9 bis 10, wobei die Numerologie des Uplink-Trägers eine Übertragungsstartzeit umfasst, wobei das Sendemodul (21) ferner konfiguriert ist, zum:
falls eine Übertragungsstartzeit des PUSCH gleich einer Übertragungsstartzeit eines PUCCH ist oder die Übertragungsstartzeit des PUSCH nach der Übertragungsstartzeit des PUCCH liegt, Multiplexen des PUSCH zum Senden von UCI.

12. UE nach einem der Ansprüche 9 bis 10, wobei der Uplink-Datenplanungstyp eine Grant-Free- oder eine konfigurierte Planung umfasst, wobei das Sendemodul (21) ferner konfiguriert ist, zum:
in dem Fall, dass eine Übertragungsstartzeit des PUSCH vor einer Übertragungsstartzeit eines PUCCH liegt und mindestens einer von überlappten PUSCHs ein Grant-Free-PUSCH oder ein konfigurierter Planungs-PUSCH ist, Durchstechen eines überlappten Abschnitts des PUCCH oder Verwerfen des UCI;
in dem Fall, dass überlappte PUSCHs keinen Grant-Free-PUSCH oder einen konfigurierten Planungs-PUSCH enthalten, Übertragen des PUCCH, Abbrechen einer Übertragung eines überlappten Abschnitts des PUSCH oder Verwerfen des gesamten PUSCH.

13. UE nach einem der Ansprüche 9, 11, 12, wobei in dem Fall, dass der PUSCH gemultiplext ist, um die UCI zu senden, und eine Vielzahl von PUSCHs, die mit einem PUCCH überlappt sind, in der Lage sind, die UCI zu tragen, das Sendemodul (21) ferner dazu konfiguriert ist, den PUSCH auszuwählen, um die UCI zu tragen, durch mindestens eines von:
Auswählen eines anderen PUSCH als eines Grant-Free-PUSCH oder eines konfigurierten Planungs-PUSCH, um UCI zu tragen;
in dem Fall, dass die Numerologie des Uplink-Trägers ferner eine UCI-Code-Rate umfasst, Auswählen des PUSCH, der eine niedrigste UCI-Code-Rate aufweisen soll, wenn er die UCI trägt, um die UCI zu tragen, gemäß einer Gewichtung eines β-Versatzes, der durch eine Netzwerkseite konfiguriert oder angezeigt wird;
in dem Fall, dass die Numerologie des Uplink-Trägers ferner eine Datenabschnitt-äquivalente Code-Rate und ein Steuerbit von PUSCH umfasst, Auswählen des PUSCH, der eine niedrigste Datenabschnitt-äquivalente Code-Rate oder einen niedrigsten Steuerbit-Overhead aufweisen soll, wenn er die UCI trägt, um die UCI zu tragen;
in dem Fall, dass die Numerologie des Uplink-Trägers ferner eine Übertragungsendzeit umfasst, Auswählen des PUSCH mit einer frühesten Übertragungsendzeit, um UCI zu tragen;
in dem Fall, dass ein überlappter PUSCH in einer Zelle oder einem Träger des PUCCH übertragen wird, Auswählen des überlappten PUSCH, um die UCI zu tragen;
in dem Fall, dass die Numerologie des Uplink-Trägers ferner einen Zellindex oder einen Trägerindex umfasst, Auswählen des PUSCH in einer Zelle oder einem Träger mit einem kleinsten Index, um den UCI zu tragen;
in dem Fall, dass die Numerologie des Uplink-Trägers ferner eine Übertragungsendzeit umfasst und eine Vielzahl von PUSCHs, die mit dem PUCCH überlappt sind, in der Lage sind, den UCI zu tragen, Auswählen des PUSCH mit derselben Übertragungsstartzeit wie eine Übertragungsstartzeit des PUCCH und mit einer frühesten Übertragungsendzeit, um UCI zu tragen.

## Revendications

1. Procédé d'envoi d'informations de commande de liaison montante (Uplink Control Information - UCI), comprenant :
dans le cas où un chevauchement du canal de commande de liaison montante physique (Physical Uplink Control Channel - PUCCH), et du canal partagé de liaison montante physique (Physical Uplink Shared Channel - PUSCH), dans un domaine temporel se produit, sélectionner (101) un PUSCH pour transporter et envoyer des UCI, sur la base d'au moins un type d'ordonnancement de données de liaison montante et d'une numérotation de porteuse de liaison montante ;
dans lequel le type d'ordonnancement de données de liaison montante comprend l'ordonnancement par des informations de commande de liaison descendante (Downlink Control Information - DCI), et la sélection du PUSCH pour transporter et envoyer les UCI comprend :
dans le cas où le PUSCH est ordonnancé par des DCI et les DCI indiquent un signalement d'information d'état de canal apériodique (Aperiodic Channel State Information / A-CSI), ou un signalement d'information d'état de canal semi-persistant (Semi-Persistent Channel State Information / SP-CSI), sélectionner le PUSCH pour transporter et envoyer les UCI.

2. Procédé d'envoi d'UCI selon la revendication 1, dans lequel avant la sélection (101) du PUSCH pour transporter et envoyer les UCI sur la base d'au moins un type parmi un type d'ordonnancement de données de liaison montante et d'une numérotation de porteuse de liaison montante, le procédé comprend de plus :
déterminer si le chevauchement de PUCCH et de PUSCH dans le domaine temporel se produit, dans un intervalle d'envoi de PUCCH.

3. Procédé d'envoi d'UCI selon la revendication 2, dans lequel la détermination consistant à savoir si le chevauchement de PUCCH et PUSCH dans le domaine temporel se produit comprend :
mapper un PUCCH et un PUSCH sur une porteuse de référence, et mettre à l'échelle le PUCCH et le PUSCH selon la numérotation de la porteuse de liaison montante ;
déterminer si le chevauchement de PUCCH et de PUSCH dans le domaine temporel se produit, selon une position de départ et une durée d'un symbole du PUCCH mappé et une position de départ et une durée d'un symbole du PUSCH mappé.

4. Procédé d'envoi d'UCI selon la revendication 3, dans lequel la porteuse de référence est une porteuse du PUCCH.

5. Procédé d'envoi d'UCI selon la revendication 2, dans lequel la détermination de savoir si le chevauchement de PUCCH et PUSCH dans le domaine temporel se produit comprend :
mettre à l'échelle un PUCCH selon une numérotation du PUCCH et mapper le PUCCH à une porteuse de chaque PUSCH ; dans le cas où une position de départ et une durée d'un symbole du PUCCH mappé se chevauchent au moins partiellement avec un intervalle du PUSCH, déterminer que le chevauchement du PUCCH et du PUSCH dans le domaine temporel se produit.

6. Procédé d'envoi d'UCI selon l'une quelconque des revendications 1 à 5, dans lequel la numérotation de la porteuse de liaison montante comprend un temps de début de transmission, la sélection du PUSCH pour transporter et envoyer les UCI comprend :
dans le cas où un temps de début de transmission du PUSCH est le même qu'un temps de début de transmission d'un PUCCH ou le temps de début de transmission du PUSCH est plus tardif que le temps de début de transmission du PUCCH, multiplexer le PUSCH pour envoyer les UCI.

7. Procédé d'envoi d'UCI selon l'une quelconque des revendications 1 à 5, dans lequel le type d'ordonnancement de données de liaison montante comprend un ordonnancement sans autorisation ou un ordonnancement configuré, la sélection du PUSCH pour transporter et envoyer les UCI comprend :
dans le cas où un temps de début de transmission du PUSCH est antérieur à un temps de début de transmission d'un PUCCH et au moins un des PUSCH qui se chevauche est un PUSCH sans autorisation ou un PUSCH à ordonnancement configuré, perforer une partie qui se chevauche du PUCCH ou rejeter les UCI ;
dans le cas où les PUSCH qui se chevauchent n'incluent pas un PUSCH sans autorisation ou un PUSCH d'ordonnancement configuré, transmettre le PUCCH, abandonner une transmission d'une partie qui se chevauche du PUSCH ou rejeter le PUSCH entier.

8. Procédé d'envoi d'UCI selon l'une quelconque des revendications 1, 6, 7, dans lequel, dans le cas où le PUSCH est multiplexé pour envoyer les UCI et où une pluralité de PUSCH qui se chevauchent avec un PUCCH sont capables de transporter les UCI, sélectionner le PUSCH pour transporter les UCI, par au moins l'un des moyens suivants :
sélectionner un PUSCH autre qu'un PUSCH sans autorisation ou un PUSCH d'ordonnancement configuré pour transporter les UCI ;
dans le cas où la numérotation de la porteuse de liaison montante comprend de plus un débit de code UCI, sélectionner le PUSCH qui doit avoir un débit de code UCI le plus bas lorsqu'il transporte les UCI pour transporter les UCI, selon une pondération d'un décalage β configuré ou indiqué par un côté réseau ;
dans le cas où la numérotation de la porteuse de liaison montante comprend de plus un débit de code équivalent de partie de données et un bit de commande de PUSCH, sélectionner le PUSCH qui doit avoir un débit de code équivalent de partie de données le plus bas ou un surdébit de bits de commande le plus bas lorsqu'il transporte les UCI pour transporter les UCI ;
dans le cas où la numérotation de porteuse de liaison montante comprend de plus un temps de fin de transmission, sélectionner le PUSCH avec un temps de fin de transmission le plus antérieur pour transporter les UCI ;
dans le cas où un PUSCH qui se chevauche est transmis dans une cellule ou une porteuse du PUCCH, sélectionner le PUSCH qui se chevauche pour transporter les UCI ;
dans le cas où la numérotation de la porteuse de liaison montante comprend de plus un indice de cellule ou un indice de porteuse, sélectionner le PUSCH dans une cellule ou une porteuse avec un indice le plus petit pour transporter les UCI ;
dans le cas où la numérotation de la porteuse de liaison montante comprend de plus un temps de fin de transmission et où une pluralité de PUSCH qui chevauchent le PUCCH sont capables de transporter les UCI, sélectionner le PUSCH avec un même temps de début de transmission qu'un temps de début de transmission du PUCCH et avec un temps de fin de transmission le plus antérieur pour transporter les UCI.

9. Équipement utilisateur (UE), comprenant :
un module d'envoi (21) configuré pour : dans le cas où un chevauchement du canal de commande de liaison montante physique (PUCCH) et du canal partagé de liaison montante physique (PUSCH), dans un domaine temporel se produit, sélectionner un PUSCH pour transporter et envoyer des UCI, sur la base d'au moins un type d'ordonnancement de données de liaison montante et d'une numérotation de porteuse de liaison montante ;
dans lequel le type d'ordonnancement de données de liaison montante comprend l'ordonnancement par des informations de commande de liaison descendante (DCI), le module d'envoi (21) est de plus configuré pour :
dans le cas où le PUSCH est ordonnancé par des DCI et où les DCI indiquent un signalement d'information d'état de canal apériodique (A-CSI) ou un signalement d'information d'état de canal semi-persistant (SP-CSI), sélectionner le PUSCH pour transporter et envoyer les UCI.

10. UE selon la revendication 9, comprenant de plus :
un module de traitement (22) configuré pour déterminer si le chevauchement de PUCCH et PUSCH dans le domaine temporel se produit, dans un intervalle d'envoi de PUCCH.

11. UE selon l'une quelconque des revendications 9 à 10, dans lequel la numérotation de la porteuse de liaison montante comprend un temps de début de transmission, le module d'envoi (21) est de plus configuré pour :
dans le cas où un temps de début de transmission du PUSCH est le même qu'un temps de début de transmission d'un PUCCH ou le temps de début de transmission du PUSCH est plus tardif que le temps de début de transmission du PUCCH, multiplexer le PUSCH pour envoyer les UCI.

12. UE selon l'une quelconque des revendications 9 à 10, dans lequel le type d'ordonnancement des données de liaison montante comprend un ordonnancement sans autorisation ou un ordonnancement configuré, le module d'envoi (21) est de plus configuré pour :
dans le cas où un temps de début de transmission du PUSCH est antérieur à un temps de début de transmission d'un PUCCH et au moins un des PUSCH qui se chevauchent est un PUSCH sans autorisation ou un PUSCH à ordonnancement configuré, perforer une partie qui se chevauche du PUCCH ou rejeter les UCI ;
dans le cas où les PUSCH qui se chevauchent n'incluent pas un PUSCH sans autorisation ou un PUSCH d'ordonnancement configuré, transmettre le PUCCH, abandonner une transmission d'une partie qui se chevauche du PUSCH ou rejeter le PUSCH entier.

13. UE selon l'une quelconque des revendications 9, 11, 12, dans lequel dans le cas où le PUSCH est multiplexé pour envoyer les UCI et où une pluralité de PUSCH qui se chevauchent avec un PUCCH sont capables de transporter les UCI, le module d'envoi (21) est de plus configuré pour sélectionner le PUSCH pour transporter les UCI, par l'intermédiaire d'au moins l'un des éléments suivants :
sélectionner un PUSCH autre qu'un PUSCH sans autorisation ou un PUSCH d'ordonnancement configuré pour transporter les UCI ;
dans le cas où la numérotation de la porteuse de liaison montante comprend de plus un débit de code UCI, sélectionner le PUSCH qui doit avoir un débit de code UCI le plus bas lorsqu'il transporte les UCI pour transporter les UCI, selon une pondération d'un décalage β configuré ou indiqué par un côté réseau ;
dans le cas où la numérotation de la porteuse de liaison montante comprend de plus un débit de code équivalent de partie de données et un bit de commande de PUSCH, sélectionner le PUSCH qui doit avoir un débit de code équivalent de partie de données le plus bas ou un surdébit de bits de commande le plus bas lorsqu'il transporte les UCI pour transporter les UCI ;
dans le cas où la numérotation de porteuse de liaison montante comprend de plus un temps de fin de transmission, sélectionner le PUSCH avec un temps de fin de transmission le plus antérieur pour transporter les UCI ;
dans le cas où un PUSCH qui se chevauche est transmis dans une cellule ou une porteuse du PUCCH, sélectionner le PUSCH qui se chevauche pour transporter les UCI ;
dans le cas où la numérotation de la porteuse de liaison montante comprend de plus un indice de cellule ou un indice de porteuse, sélectionner le PUSCH dans une cellule ou une porteuse avec un indice le plus petit pour transporter les UCI ;
dans le cas où la numérotation de la porteuse de liaison montante comprend de plus un temps de fin de transmission et où une pluralité de PUSCH qui chevauchent le PUCCH sont capables de transporter les UCI, sélectionner le PUSCH avec un même temps de début de transmission qu'un temps de début de transmission du PUCCH et avec un temps de fin de transmission le plus antérieur pour transporter les UCI.
